(19) Europäisches Patentamt
European Patent Office
Office européen des brevets

(11) EP 2 803 688 A1

(12) **EUROPEAN PATENT APPLICATION**
published in accordance with Art. 153(4) EPC

(43) Date of publication:
**19.11.2014 Bulletin 2014/47**

(21) Application number: **13736139.0**

(22) Date of filing: **10.01.2013**

(51) Int Cl.:
***C08G 69/40*** *(2006.01)*

(86) International application number:
**PCT/JP2013/050319**

(87) International publication number:
**WO 2013/105607 (18.07.2013 Gazette 2013/29)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.01.2012 JP 2012003778**

(71) Applicant: **Mitsubishi Gas Chemical Company, Inc.**
**Tokyo 100-8324 (JP)**

(72) Inventors:
- **TAKEO, Mayumi**
  **Hiratsuka-shi**
  **Kanagawa 254-0016 (JP)**
- **KATOU, Tomonori**
  **Hiratsuka-shi**
  **Kanagawa 254-0016 (JP)**

(74) Representative: **Vossius & Partner**
**Siebertstrasse 4**
**81675 München (DE)**

(54) **POLYETHER POLYAMIDE ELASTOMER**

(57) Provided is a polyether polyamide elastomer including a diamine constituent unit derived from a specified polyether diamine compound and a xylylenediamine and a dicarboxylic acid constituent unit derived from an α,ω-linear aliphatic dicarboxylic acid having a carbon number of from 8 to 20.

EP 2 803 688 A1

## Description

TECHNICAL FIELD

The present invention relates to a polyether polyamide elastomer having heat resistance, crystallinity, and flexibility.

BACKGROUND ART

Rubbers having a chemical crosslinking point by vulcanization cannot be recycled and have a high specific gravity. On the other hand, thermoplastic elastomers are composed of a phase separation structure containing a physical crosslinking point by crystallization or the like as a hard segment and an amorphous portion as a soft segment, so that the thermoplastic elastomers have such characteristic features that they are easily subjected to melt molding processing, are able to be recycled, and have a low specific gravity. Accordingly, the thermoplastic elastomers are watched in the fields of automobile parts, electric and electronic parts, sporting goods, and the like.

As the thermoplastic elastomers, there are developed a variety of thermoplastic elastomers such as polyolefin-based, polyurethane-based, polyester-based, polyamide-based, polystyrene-based, or polyvinyl chloride-based thermoplastic elastomers, etc. Of these, polyurethane-based, polyester-based, and polyamide-based thermoplastic elastomers are known as an elastomer having relatively excellent heat resistance.

Above all, polyamide elastomers are excellent in terms of flexibility, low specific gravity, friction resistance, abrasion resistance properties, elasticity, bending fatigue resistance, low-temperature properties, molding processability, and chemical resistance, so that they are widely used as materials of tubes, hoses, sporting goods, seal packings, and automobile or electric and electronic parts.

As the polyamide elastomers, there are known polyether polyamide elastomers containing a polyamide as a hard segment and a polyether as a soft segment, and the like. As examples thereof, PTL 1 and PTL 2 disclose polyether polyamide elastomers based on an aliphatic polyamide such as polyamide 12, etc.

CITATION LIST

Patent Literature

PTL 1: JP-A-2004-161964
PTL 2: JP-A-2004-346274

SUMMARY OF INVENTION

Technical Problem

As for the above-described polyether polyamide elastomers, aliphatic polyamides such as polyamide 12, etc. are utilized as a polyamide component thereof. However, since the polyamide component has a low melting point, such polyether polyamide elastomers are insufficient in terms of heat resistance in applications for which they are utilized in a high-temperature environment.

The problem to be solved by the present invention is to provide a heat-resistant polyether polyamide elastomer which is suitable for materials of automobile or electric and electronic parts requiring heat resistance, while keeping melt moldability, toughness, flexibility, and rubbery properties of polyamide elastomers.

Solution to Problem

In order to solve the foregoing problem, the present inventors made extensive and intensive investigations. As a result, it has been found that the above-described object can be solved by a polyether polyamide elastomer including a diamine constituent unit derived from a specified polyether diamine compound and a xylylenediamine and a dicarboxylic acid constituent unit derived from an $\alpha,\omega$-linear aliphatic dicarboxylic acid having a carbon number of from 8 to 20, leading to accomplishment of the present invention.

Specifically, according to the present invention, a polyether polyamide elastomer including a diamine constituent unit derived from a polyether diamine compound (A-1) represented by the following general formula (1) and a xylylenediamine (A-2) and a dicarboxylic acid constituent unit derived from an $\alpha,\omega$-linear aliphatic dicarboxylic acid having a

carbon number of from 8 to 20, is provided.

[Chem. 1]

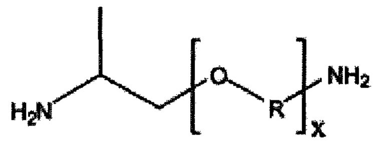

(1)

(In the formula (1), x represents a numerical value of from 1 to 80; and R represents a propylene group.)

Preferred embodiments of the present invention are as follows.

1. The xylylenediamine (A-2) is m-xylylenediamine, p-xylylenediamine, or a mixture thereof.
2. The $\alpha,\omega$-linear aliphatic dicarboxylic acid having a carbon number of from 8 to 20 is sebacic acid.
3. A proportion of the constituent unit derived from the xylylenediamine (A-2) in the diamine constituent unit is in the range of from 50 to 99.9 % by mole.
4. A relative viscosity of the polyether polyamide elastomer is from 1.2 to 3.0.
5. A melting point of the polyether polyamide elastomer is from 170 °C to 230 °C.
6. A rate of tensile elongation at break of the polyether polyamide elastomer at a measurement temperature of 23 °C and a humidity of 50 %RH is 100 % or more.

Advantageous Effects of Invention

The polyether polyamide elastomer of the present invention is suitable for materials of automobile or electric and electronic parts requiring high heat resistance and has higher crystallinity and heat resistance, while keeping melt moldability, flexibility, and rubbery properties of existent polyether polyamide elastomers.

DESCRIPTION OF EMBODIMENTS

[Polyether Polyamide Elastomer]

The polyether polyamide elastomer of the present invention comprises a diamine constituent unit derived from a polyether diamine compound (A-1) represented by the following general formula (1) and a xylylenediamine (A-2) and a dicarboxylic acid constituent unit derived from an $\alpha,\omega$-linear aliphatic dicarboxylic acid having a carbon number of from 8 to 20.

[Chem. 2]

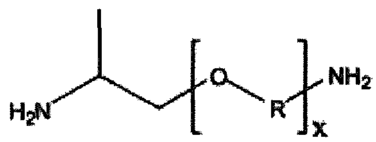

(1)

(In the formula (1), x represents a numerical value of from 1 to 80; and R represents a propylene group.)

(Diamine Constituent Unit)

The diamine constituent unit that constitutes the polyether polyamide elastomer of the present invention is derived from a polyether diamine compound (A-1) represented by the foregoing general formula (1) and a xylylenediamine (A-2).

<Polyether Diamine Compound (A-1)>

The diamine constituent unit that constitutes the polyether polyamide elastomer of the present invention includes

a constituent unit derived from a polyether diamine compound (A-1) represented by the foregoing general formula (1). In the polyether diamine compound (A-1) which is used in the present invention, the numerical value of x in the foregoing general formula (1) is from 1 to 80, preferably from 1 to 40, and more preferably from 1 to 20. In the case where the value of x is larger than the foregoing range, the compatibility with an oligomer or polymer composed of a xylylenediamine and a dicarboxylic acid, which is produced on the way of a reaction of melt polymerization, becomes low, so that the polymerization proceeds hardly, and hence, such is not preferable.

In addition, R in the foregoing general formula (1) represents a propylene group. A structure of an oxypropylene group represented by -OR- may be any of $-OCH(CH_3)CH_2-$ or $-OCH_2CH(CH_3)-$.

A weight average molecular weight of the polyether diamine compound (A-1) is preferably from 132 to 5,000, more preferably from 132 to 3,000, and still more preferably from 132 to 2,000. So long as the average molecular weight of the polyether diamine compound falls within the foregoing range, a polymer that reveals functions as an elastomer, such as flexibility, rubber elasticity, etc., can be obtained.

<Xylylenediamine (A-2)>

The diamine constituent unit that constitutes the polyether polyamide elastomer of the present invention includes a constituent unit derived from a xylylenediamine (A-2). The xylylenediamine (A-2) that constitutes the diamine constituent unit of the polyether polyamide elastomer of the present invention is preferably m-xylylenediamine, p-xylylenediamine, or a mixture thereof, and more preferably m-xylylenediamine or a mixture of m-xylylenediamine and p-xylylenediamine.

In the case where the xylylenediamine (A-2) that constitutes the diamine constituent unit is m-xylylenediamine, the resulting polyether polyamide elastomer is excellent in terms of flexibility and crystallinity.

In the case where the xylylenediamine (A-2) that constitutes the diamine constituent unit is a mixture of m-xylylenediamine and p-xylylenediamine, the resulting polyether polyamide elastomer is excellent in terms of flexibility and crystallinity and furthermore, exhibits heat resistance and high elastic modulus.

In the case where a mixture of m-xylylenediamine and p-xylylenediamine is used as the xylylenediamine (A-2), a proportion of the p-xylylenediamine relative to a total amount of m-xylylenediamine and p-xylylenediamine is preferably not more than 90 % by mole, more preferably from 1 to 80 % by mole, and still more preferably from 5 to 70 % by mole. So long as the proportion of p-xylylenediamine falls within the foregoing range, a melting point of the resulting polyether polyamide elastomer is not close to a decomposition temperature of the polyether polyamide elastomer, and hence, such is preferable.

A proportion of the xylylenediamine (A-2) relative to a total amount of the polyether diamine compound (A-1) and the xylylenediamine (A-2), both of which constitute the diamine constituent unit, namely a proportion of the constituent unit derived from the xylylenediamine (A-2) in the diamine constituent unit, is preferably from 50 to 99.9 % by mole, more preferably from 70 to 99 % by mole, and still more preferably from 80 to 99 % by mole. So long as the proportion of the constituent unit derived from the xylylenediamine (A-2) in the diamine constituent unit falls within the foregoing range, the resulting polyether polyamide elastomer is excellent in terms of melt moldability and furthermore, is excellent in terms of mechanical physical properties such as strength, elastic modulus, etc.

As described previously, though the diamine constituent unit that constitutes the polyether polyamide elastomer of the present invention is derived from the polyether diamine compound (A-1) represented by the foregoing general formula (1) and the xylylenediamine (A-2), so long as the effects of the present invention are not hindered, other diamine compound may be copolymerized therewith.

Examples of the diamine compound other than the polyether diamine compound (A-1) and the xylylenediamine (A-2), which may constitute the diamine constituent unit, include aliphatic diamines such as tetramethylenediamine, pentamethylenediamine, 2-methylpentanediamine, hexamethylenediamine, heptamethylenediamine, octamethylenediamine, nonamethylenediamine, decamethylenediamine, dodecamethylenediamine, 2,2,4-trimethylhexamethylenediamine, 2,4,4-trimethylhexamethylenediamine, etc.; alicyclic diamines such as 1,3-diaminocyclohexane, 1,4-diaminocyclohexane, bis(4-aminocyclohexyl)methane, 2,2-bis(4-aminocyclohexyl)propane, bis(aminomethyl)decalin, bis(aminomethyl)tricyclodecane, etc.; aromatic ring-containing diamines such as bis(4-aminophenyl)ether, p-phenylenediamine, bis(aminomethyl)naphthalene, etc.; and the like. However, the diamine compound is not limited to these examples.

(Dicarboxylic Acid Constituent Unit)

The dicarboxylic acid constituent unit that constitutes the polyether polyamide elastomer of the present invention is derived from an α,ω-linear aliphatic dicarboxylic acid having a carbon number of from 8 to 20. In the case where the carbon number exceeds 20, the mechanical strength of the polyether polyamide elastomer is insufficient.

Examples of the α,ω-linear aliphatic dicarboxylic acid having a carbon number of from 8 to 20 include suberic acid, azelaic acid, sebacic acid, 1,10-decanedicarboxylic acid, 1,11-undecanedicarboxylic acid, 1,12-dodecanedicarboxylic acid, and the like. Of these, sebacic acid is preferably used from the viewpoints of crystallinity and high elasticity.

These dicarboxylic acids may be used solely or in combination of two or more kinds thereof.

When the polyether polyamide elastomer of the present invention contains, as a hard segment, a highly crystalline polyamide block formed of the xylylenediamine and the $\alpha,\omega$-linear aliphatic dicarboxylic acid having a carbon number of from 8 to 20 and, as a soft segment, a polyether block derived from the polyether diamine compound (A-1), it is excellent in terms of melt moldability and molding processability. Furthermore, the resulting polyether polyamide elastomer is excellent in terms of toughness, flexibility, crystallinity, heat resistance, and the like.

A relative viscosity of the polyether polyamide elastomer of the present invention is measured by a method as described later. From the viewpoints of melt moldability and molding processability, the relative viscosity is preferably in the range of from 1.2 to 3.0, more preferably in the range of from 1.2 to 2.9, and still more preferably in the range of from 1.2 to 2.8. When the relative viscosity falls within the foregoing range, excellent molding processability is revealed.

A melting point of the polyether polyamide elastomer of the present invention is measured by a method as described later, and it is preferably in the range of from 170 °C to 230 °C, more preferably in the range of from 170 °C to 225 °C, and still more preferably in the range of from 170 °C to 220 °C. When the melting point falls within the foregoing range, a polyether polyamide elastomer having excellent heat resistance is produced.

The polyether polyamide elastomer of the present invention preferably has a rate of tensile elongation at break (measurement temperature: 23 °C, humidity: 50 %RH) of 100 % or more and a tensile elastic modulus (measurement temperature: 23 °C, humidity: 50 %RH) of 200 MPa or more, more preferably has a rate of tensile elongation at break of 150 % or more and a tensile elastic modulus of 300 MPa or more, and still preferably has a rate of tensile elongation at break of 200 % or more and a tensile elastic modulus of 500 MPa or more. When the rate of tensile elongation at break is 100 % or more, a polyether polyamide elastomer having excellent flexibility is produced. When the tensile elastic modulus is 200 MPa or more, a polyether polyamide elastomer having flexibility and simultaneously having excellent mechanical strength is produced.

A molar ratio of the diamine component (the polyether diamine such as the polyether diamine compound (A-1), etc. and the diamine such as the xylylenediamine (A-2), etc.) and the dicarboxylic acid component (the dicarboxylic acid such as the $\alpha,\omega$-linear aliphatic dicarboxylic acid having a carbon number of from 8 to 20, etc.) ((diamine component)/(dicarboxylic acid component)) is preferably in the range of from 0.9 to 1.1, more preferably in the range of from 0.93 to 1.07, still more preferably in the range of from 0.95 to 1.05, and especially preferably in the range of from 0.97 to 1.02. When the molar ratio falls within the foregoing range, an increase of the molecular weight is easily advanced.

The manufacture of the polyether polyamide elastomer of the present invention is not particularly limited but can be performed by an arbitrary method under an arbitrary polymerization condition. For example, the polyether polyamide elastomer can be manufactured by a method in which a salt composed of a diamine component (e.g., a xylylenediamine, etc.) and a dicarboxylic acid component (e.g., sebacic acid, etc.) is subjected to temperature rise in the presence of water in a pressurized state and polymerized in a molten state while removing added water and condensed water. In addition, the polyether polyamide elastomer can also be manufactured by a method in which a diamine component (e.g., a xylylenediamine, etc.) is added directly to a dicarboxylic acid component (e.g., sebacic acid, etc.) in a molten state, and the mixture is polycondensed at atmospheric pressure. In that case, in order to keep the reaction system in a uniform liquid state, the diamine component is continuously added to the dicarboxylic acid component, and meanwhile, the polycondensation is advanced while subjecting the reaction system to temperature rise such that the reaction temperature does not fall below the melting point of the produced oligoamide or polyamide. A polymerization temperature is preferably from 150 to 300 °C, more preferably from 160 to 280 °C, and still more preferably from 170 to 260 °C. So long as the polymerization temperature falls within the foregoing range, the polymerization reaction is rapidly advanced. In addition, since heat decomposition of the monomers or the oligomer or polymer, etc. on the way of the polymerization hardly occurs, properties of the resulting polyether polyamide elastomer become favorable.

In the manufacture of the polyether polyamide elastomer of the present invention, a polymerization time is in general from 1 to 5 hours. When the polymerization time is allowed to fall within the foregoing range, the molecular weight of the polyether polyamide elastomer can be sufficiently increased, and furthermore, coloration of the resulting polymer is suppressed. Thus, a polyether polyamide elastomer having desired physical properties can be obtained.

It is preferable that the polyether polyamide elastomer of the present invention is manufactured by a melt polycondensation (melt polymerization) method upon addition of a phosphorus atom-containing compound. The melt polycondensation method is preferably a method in which the diamine component (preferably a mixed liquid of the diamine components) is added dropwise to the dicarboxylic acid component having been melted at atmospheric pressure, and the mixture is polymerized in a molten state while removing condensed water.

In the polycondensation system of the polyether polyamide elastomer of the present invention, a phosphorus atom-containing compound can be added within the range where its properties are not hindered.

Examples of the phosphorus atom-containing compound which can be added include dimethylphosphinic acid, phenylmethylphosphinic acid, hypophosphorous acid, sodium hypophosphite, potassium hypophosphite, lithium hypophosphite, ethyl hypophosphite, phenylphosphonous acid, sodium phenylphosphonoate, potassium phenylphosphonoate, lithium phenylphosphonoate, ethyl phenylphosphonoate, phenylphosphonic acid, ethylphosphonic acid, sodium

phenylphosphonate, potassium phenylphosphonate, lithium phenylphosphonate, diethyl phenylphosphonate, sodium ethylphosphonate, potassium ethylphosphonate, phosphorous acid, sodium hydrogen phosphite, sodium phosphite, triethyl phosphite, triphenyl phosphite, pyrrophosphorous acid, and the like. Of these, in particular, hypophosphorous acid metal salts such as sodium hypophosphite, potassium hypophosphite, lithium hypophosphite, etc. are preferably used because they are high in terms of an effect for promoting the amidation reaction and also excellent in terms of a coloration preventing effect, with sodium hypophosphite being especially preferable. The phosphorus atom-containing compound which can be used in the present invention is not limited to these compounds.

The addition amount of the phosphorus atom-containing compound which is added to the polycondensation system is preferably from 1 to 1,000 ppm, more preferably from 5 to 1,000 ppm, and still more preferably from 10 to 1,000 ppm in terms of a concentration of the phosphorus atom in the polyether polyamide elastomer. When the concentration of the phosphorus atom in the polyether polyamide elastomer is from 1 to 1,000 ppm, a polyether polyamide elastomer having a good appearance and also having excellent molding processability can be obtained.

In addition, it is preferable to add an alkali metal compound in combination with the phosphorus atom-containing compound to the polycondensation system of the polyether polyamide elastomer of the present invention. In order to prevent the coloration of the polymer during the polycondensation from occurring, it is necessary to allow a sufficient amount of the phosphorus atom-containing compound to exist. Under certain circumstances, there is a concern that gelation of the polymer is caused. Thus, in order to also adjust an amidation reaction rate, it is preferable to allow an alkali metal compound to coexist. As the alkali metal compound, alkali metal hydroxides and alkali metal acetates are preferable. Examples of the alkali metal compound which can be used in the present invention include lithium hydroxide, sodium hydroxide, potassium hydroxide, rubidium hydroxide, cesium hydroxide, lithium acetate, sodium acetate, potassium acetate, rubidium acetate, cesium acetate, and the like. However, the alkali metal compound can be used without being limited to these compounds.

In the case of adding the alkali metal compound to the polycondensation system, a value obtained by dividing the molar number of the compound by the molar number of the phosphorus atom-containing compound is regulated to preferably from 0.5 to 1, more preferably from 0.55 to 0.95, and still more preferably from 0.6 to 0.9. When the subject value falls within the foregoing range, an effect for suppressing the promotion of the amidation reaction of the phosphorus atom-containing compound is appropriate. In consequence, the occurrence of the matter that the polycondensation reaction rate is lowered due to excessive suppression of the promotion of the amidation reaction, so that thermal history of the polymer increases, thereby causing an increase of gelation of the polymer can be avoided.

A sulfur atom concentration of the polyether polyamide elastomer of the present invention is preferably from 1 to 200 ppm, more preferably from 10 to 150 ppm, and especially preferably from 20 to 100 ppm. When the sulfur atom concentration falls within the foregoing range, not only an increase of yellowness (YI value) of the polyether polyamide elastomer at the time of manufacture can be suppressed, but an increase of the YI value at the time of melt molding of the polyether polyamide elastomer can be suppressed, thereby making it possible to suppress the YI value of the resulting molded article at a low level.

Furthermore, in the case of using sebacic acid as the dicarboxylic acid that constitutes the polyether polyamide elastomer of the present invention, its sulfur atom concentration is preferably from 1 to 200 ppm, more preferably from 10 to 150 ppm, and still more preferably from 20 to 100 ppm. When the sulfur atom concentration falls within the foregoing range, an increase of the YI at the time of manufacture of the polyether polyamide elastomer can be suppressed. In addition, an increase of the YI at the time of melt molding of the polyether polyamide elastomer can be suppressed, thereby making it possible to suppress the YI of the resulting molded article at a low level.

Similarly, in the case of using sebacic acid as the dicarboxylic acid that constitutes the polyether polyamide elastomer of the present invention, its sodium atom concentration is preferably from 1 to 500 ppm, more preferably from 10 to 300 ppm, and still more preferably from 20 to 200 ppm. When the sodium atom concentration falls within the foregoing range, the reactivity at the time of manufacture of the polyether polyamide elastomer is good, the molecular weight can be easily controlled to an appropriate range, and furthermore, the use amount of the alkali metal compound which is blended for the purpose of adjusting the amidation reaction rate as described above can be made small. In addition, an increase of the viscosity at the time of melt molding of the polyether polyamide elastomer can be suppressed, and not only the moldability becomes favorable, but the generation of scorch at the time of molding processing can be suppressed. Thus, the quality of the resulting molded article tends to become favorable.

Such sebacic acid is preferably plant-derived sebacic acid. In view of the fact that the plant-derived sebacic acid contains sulfur compounds or sodium compounds as impurities, the polyether amide containing, as a constituent unit, a unit derived from plant-derived sebacic acid is low in terms of the YI even when an antioxidant is not added, and the YI of the resulting molded article is also low. In addition, it is preferable to use the plant-derived sebacic acid without excessive purification for the impurities. Since it is not necessary to perform excessive purification, such is advantageous from the standpoint of costs.

In the case of the plant-derived sebacic acid, its purity is preferably from 99 to 100 % by mass, more preferably from 99.5 to 100 % by mass, and still more preferably from 99.6 to 100 % by mass. When the purity falls within this

range, the quality of the resulting polyether polyamide elastomer is good, so that the polymerization is not affected, and hence, such is preferable.

For example, the amount of a dicarboxylic acid which the sebacic acid contains, such as 1,10-decamethylenedicarboxylic acid, etc., is preferably from 0 to 1 % by mass, more preferably from 0 to 0.7 % by mass, and still more preferably from 0 to 0.6 % by mass. When the amount of the dicarboxylic acid falls within this range, the quality of the resulting polyether polyamide elastomer is good, so that the polymerization is not affected, and hence, such is preferable.

In addition, the amount of a monocarboxylic acid which the sebacic acid contains, such as octanoic acid, nonanoic acid, undecanoic acid, etc., is preferably from 0 to 1 % by mass, more preferably from 0 to 0.5 % by mass, and still more preferably from 0 to 0.4 % by mass. When the amount of the monocarboxylic acid falls within this range, the quality of the resulting polyether polyamide elastomer is good, so that the polymerization is not affected, and hence, such is preferable.

A hue (APHA) of the sebacic acid is preferably not more than 100, more preferably not more than 75, and still more preferably not more than 50. When the hue falls within this range, the YI of the resulting polyether polyamide elastomer is low, and hence, such is preferable. Incidentally, the APHA can be measured in conformity with the Standard Methods for the Analysis of Fats, Oils and Related Materials by the Japan Oil Chemists' Society.

The polyether polyamide elastomer of the present invention, which is obtained by the melt polycondensation, is once taken out, pelletized, and then dried for use. In addition, for the purpose of more increasing the degree of polymerization, solid phase polymerization may also be performed. As a heating apparatus which is used for dry or solid phase polymerization, a continuous heat drying apparatus, a rotary drum type heating apparatus called, for example, a tumble dryer, a conical dryer, a rotary dryer, etc., or a cone type heating apparatus equipped with a rotary blade in the inside thereof, called a Nauta mixer, can be suitably used. However, known methods and apparatuses can be used without being limited thereto.

To the polyether polyamide elastomer of the present invention, additives such as a matting agent, a heat resistant stabilizer, a weather resistant stabilizer, an ultraviolet ray absorber, a nucleating agent, a plasticizer, a flame retarder, an antistatic agent, a coloration preventive, a gelation preventive, etc. can be added as the need arises within the range where the properties thereof are not hindered.

The polyether polyamide elastomer of the present invention may also be blended with a thermoplastic resin such as a polyamide resin, a polyester resin, a polyolefin resin, etc., and impact resistance, elasticity, flexibility, and the like of such a resin can be improved.

As the polyamide resin, polycaproamide (nylon 6), polyundecanamide (nylon 11), polydodecanamide (nylon 12), polytetramethylene adipamide (nylon 46), polyhexamethylene adipamide (nylon 66), polyhexamethylene azelamide (nylon 69), polyhexamethylene sebacamide (nylon 610), polyundecamethylene adipamide (nylon 116), polyhexamethylene dodecamide (nylon 612), polyhexamethylene terephthalamide (nylon 6T (T represents a terephthalic acid component unit, hereinafter the same)), polyhexamethylene isophthalamide (nylon 6I (I represents an isophthalic acid component unit, hereinafter the same)), polyhexamethylene terephthal/isophthalamide (nylon 6TI), polynonamethylene terephthalamide (nylon 9T), poly-m-xylylene adipamide (nylon MXD6 (MXD represents an m-xylylenediamine component unit, hereinafter the same)), poly-m-xylylene sebacamide (nylon MXD10), poly-p-xylylene sebacamide (nylon PXD10 (PXD represents a p-xylylenediamine component unit)), a polyamide resin obtained by polycondensation of 1,3- or 1,4-bis(aminomethyl)cyclohexane and adipic acid (nylon 1,3-/1,4-BAC6 (BAC represents a bis(aminomethyl)cyclohexane component unit)), and copolymer amides thereof, and the like can be used.

Examples of the polyester resin include a polyethylene terephthalate resin, a polyethylene terephthalate-isophthalate copolymer resin, a polyethylene-1,4-cyclohexanedimethylene-terephthalate copolymer resin, a polyethylene-2,6-naphthalene dicarboxylate resin, a polyethylene-2,6-naphthalene dicarboxylate-terephthalate copolymer resin, a polyethylene-terephthalate-4,4'-biphenyl dicarboxylate copolymer resin, a poly-1,3-propylene-terephthalate resin, a polybutylene terephthalate resin, a polybutylene-2,6-naphthalene dicarboxylate resin, and the like. Examples of the more preferred polyester resin include a polyethylene terephthalate resin, a polyethylene terephthalate-isophthalate copolymer resin, a polybutylene terephthalate resin, and a polyethylene-2,6-naphthalene dicarboxylate resin.

Examples of the polyolefin resin include polyethylenes such as low density polyethylene (LDPE), linear low density polyethylene (LLDPE), very low density polyethylene (VLDPE), medium density polyethylene (MDPE), high density polyethylene (HDPE), etc.; polypropylenes such as a propylene homopolymer, a random or block copolymer of propylene and ethylene or an $\alpha$-olefin, etc.; mixtures of two or more kinds thereof; and the like. The majority of the polyethylenes is a copolymer of ethylene and an $\alpha$-olefin.

In addition, the polyolefin resin includes a modified polyolefin resin modified with a small amount of a carboxyl group-containing monomer such as acrylic acid, maleic acid, methacrylic acid, maleic anhydride, fumaric acid, itaconic acid, etc. The modification is in general performed by means of copolymerization or graft modification.

By using the polyether polyamide elastomer of the present invention upon being blended with the above-described thermoplastic resin such as a polyamide resin, a polyester resin, a polyolefin resin, etc., a molded article which is excellent in terms of toughness, flexibility, and impact resistance can be obtained by a molding method such as

injection molding, extrusion molding, blow molding, etc.

EXAMPLES

[Measurement of Physical Properties, Molding, and Evaluation Method]

The present invention is specifically described below by reference to the following Examples and Comparative Examples. Incidentally, in the present invention, the measurement for evaluation was performed by the following methods.

1) Relative Viscosity ($\eta r$)

0.2 g of a sample was accurately weighed and dissolved in 20 mL of 96 % sulfuric acid at from 20 to 30 °C with stirring. After completely dissolving, 5 mL of the solution was rapidly taken into a Cannon-Fenske viscometer, allowed to stand in a thermostat bath at 25 °C for 10 minutes, and then measured for a fall time (t). In addition, a fall time (t0) of the 96 % sulfuric acid itself was similarly measured. A relative viscosity was calculated from t and t0 according to the following equation (2).

$$\text{Relative viscosity} = t/t0 \qquad (2)$$

2) Number Average Molecular Weight (Mn)

First of all, a sample was dissolved in a phenol/ethanol mixed solvent and a benzyl alcohol solvent, respectively, and a terminal carboxyl group concentration and a terminal amino group concentration were determined by means of neutralization titration in hydrochloric acid and a sodium hydroxide aqueous solution, respectively. A number average molecular weight was determined from quantitative values of the terminal amino group concentration and the terminal carboxyl group concentration according to the following equation.

$$\text{Number average molecular weight} = 2 \times 1{,}000{,}000/([NH2] + [COOH])$$

[NH2]: Terminal amino group concentration ($\mu$eq/g)
[COOH]: Terminal carboxyl group concentration ($\mu$eq/g)

3) Differential Scanning Calorimetry (Glass Transition Temperature, Crystallization Temperature, and Melting Point)

The measurement was performed in conformity with JIS K-7121 and K-7122. Using DSC-60, available from Shimadzu Corporation, each sample was charged in a DSC measurement pan and subjected to a pre-treatment of raising the temperature to 300 °C in a nitrogen atmosphere at a temperature rise rate of 10 °C/min and rapid cooling, followed by performing the measurement. As for the measurement condition, the measurement was performed by raising the temperature at a rate of 10 °C/min and after keeping at 300 °C for 5 minutes, dropping the temperature to 100 °C at a rate of -5 °C/min, thereby determining a glass transition temperature Tg, a crystallization temperature Tch, and a melting point Tm, respectively.

4) Tensile Test (Tensile Elastic Modulus and Rate of Tensile Elongation at Break)

The tensile test was performed in conformity with JIS K-7161. A fabricated film having a thickness of 100 $\mu$m was cut out in a size of 10 mm x 100 mm to prepare a test piece. The tensile test was carried out using a strograph, available from Toyo Seiki Seisaku-sho, Ltd. under conditions at a measurement temperature of 23 °C and a humidity of 50 %RH and at a tensile rate of 50 mm/min in a chuck-to-chuck distance of 50 mm, thereby determining a tensile elastic modulus and a rate of tensile elongation at break, respectively.

[Example 1]

In a reaction vessel having a capacity of about 3 L and equipped with a stirrer, a nitrogen gas inlet, and a condensed water discharge port, 809.00 g of sebacic acid (SA), 0.6306 g of sodium hypophosphite monohydrate, and 0.4393 g of sodium acetate were charged, and after thoroughly purging the inside of the vessel with nitrogen, the mixture

was melted at 170 °C while feeding a nitrogen gas at a rate of 20 mL/min. A mixed liquid of 517.56 g of m-xylylenediamine (available from Mitsubishi Gas Chemical Company, Inc., hereinafter sometimes abbreviated as "MXDA") and 46.00 g of a polyether diamine (a trade name: JEFFAMINE D-230, available from Huntsman Corporation, USA; which is represented by the foregoing general formula (1) and in which the round value of x is 2.5, and an approximate weight average molecular weight is 230 (according to the catalogue values)) was added dropwise thereto while gradually raising the temperature to 260 °C, and the mixture was polymerized for about 2 hours to obtain a polyether polyamide elastomer: $\eta$r = 1.45, [COOH] = 102.68 $\mu$eq/g, [NH2] = 33.42 $\mu$eq/g, Mn = 14,695, Tg = 36.0 °C, Tch = 115.6 °C, and Tm = 187.5 °C.

The resulting polyether polyamide elastomer was used and subjected to extrusion molding at a temperature of 245 °C, thereby fabricating a non-stretched film having a thickness of about 100 $\mu$m. Results obtained by evaluating tensile physical properties by using this film are shown in Table 1.

[Example 2]

In a reaction vessel having a capacity of about 3 L and equipped with a stirrer, a nitrogen gas inlet, and a condensed water discharge port, 809.00 g of sebacic acid (SA), 0.6512 g of sodium hypophosphite monohydrate, and 0.4536 g of sodium acetate were charged, and after thoroughly purging the inside of the vessel with nitrogen, the mixture was melted at 170 °C while feeding a nitrogen gas at a rate of 20 mL/min. A mixed liquid of 517.56 g of m-xylylenediamine (MXDA) and 86.00 g of a polyether diamine (a trade name: JEFFAMINE D-400, available from Huntsman Corporation, USA; which is represented by the foregoing general formula (1) and in which the round value of x is 6.1, and an approximate weight average molecular weight is 400 (according to the catalogue values)) was added dropwise thereto while gradually raising the temperature to 260 °C, and the mixture was polymerized for about 2 hours to obtain a polyether polyamide elastomer: $\eta$r = 1.42, [COOH] = 92.57 $\mu$eq/g, [NH2] = 51.78 $\mu$eq/g, Mn = 13,855, Tg = 35.2 °C, Tch = 110.1 °C, and Tm = 187.4 °C.

The resulting polyether polyamide elastomer was used and subjected to extrusion molding at a temperature of 245 °C, thereby fabricating a non-stretched film having a thickness of about 100 $\mu$m. Results obtained by evaluating tensile physical properties by using this film are shown in Table 1.

(Comparative Example 1)

In a reaction vessel having a capacity of about 3 L and equipped with a stirrer, a nitrogen gas inlet, and a condensed water discharge port, 809.00 g of sebacic acid, 0.6210 g of sodium hypophosphite monohydrate, and 0.4325 g of sodium acetate were charged, and after thoroughly purging the inside of the vessel with nitrogen, the mixture was melted at 170 °C while feeding a nitrogen gas at a rate of 20 mL/min. 544.80 g of m-xylylenediamine was added dropwise thereto while gradually raising the temperature to 260 °C, and the mixture was polymerized for about 2 hours to obtain a polyamide: $\eta$r = 1.80, [COOH] = 88.5 $\mu$eq/g, [NH2] = 26.7 $\mu$eq/g, Mn = 17,300, Tg = 61.2 °C, Tch = 114.1 °C, and Tm = 191.5 °C.

The resulting polyamide was used and subjected to extrusion molding at a temperature of 220 °C, thereby fabricating a non-stretched film having a thickness of about 100 $\mu$m. Results obtained by evaluating tensile physical properties by using this film are shown in Table 1.

(Comparative Example 2)

In a reaction vessel having a capacity of about 3 L and equipped with a stirrer, a nitrogen gas inlet, and a condensed water discharge port, 643.06 g of adipic acid (AA), 0.5658 g of sodium hypophosphite monohydrate, and 0.3941 g of sodium acetate were charged, and after thoroughly purging the inside of the vessel with nitrogen, the mixture was melted at 170 °C while feeding a nitrogen gas at a rate of 20 mL/min. A mixed liquid of 568.18 g of m-xylylenediamine (MXDA) and 50.50 g of a polyether diamine (a trade name: JEFFAMINE D-230, available from Huntsman Corporation, USA) was added dropwise thereto while gradually raising the temperature to 260 °C, and the mixture was polymerized for about 2 hours to obtain a polyether polyamide elastomer: $\eta$r = 1.45, [COOH] = 85.08 $\mu$eq/g, [NH2] = 40.30 $\mu$eq/g, Mn = 15,951, Tg = 83.2 °C, Tch = 138.5 °C, and Tm = 232.8 °C.

The resulting polyether polyamide elastomer was used and subjected to extrusion molding at a temperature of 260 °C, thereby fabricating a non-stretched film having a thickness of about 100 $\mu$m. Results obtained by evaluating tensile physical properties by using this film are shown in Table 1.

(Comparative Example 3)

In a reaction vessel having a capacity of about 3 L and equipped with a stirrer, a nitrogen gas inlet, and a condensed water discharge port, 628.45 g of adipic acid (AA), 0.5750 g of sodium hypophosphite monohydrate, and

0.4005 g of sodium acetate were charged, and after thoroughly purging the inside of the vessel with nitrogen, the mixture was melted at 170 °C while feeding a nitrogen gas at a rate of 20 mL/min. A mixed liquid of 555.26 g of m-xylylenediamine (MXDA), available from Mitsubishi Gas Chemical Company, Inc. and 92.27 g of a polyether diamine (a trade name: JEFFAMINE D-400, available from Huntsman Corporation, USA) was added dropwise thereto while gradually raising the temperature to 260 °C, and the mixture was polymerized for about 2 hours to obtain a polyether polyamide elastomer: ηr = 1.43, [COOH] = 92.57 μeq/g, [NH2] = 51.78 μeq/g, Mn = 13,855, Tg = 74.7 °C, Tch = 129.7 °C, and Tm = 232.5 °C.

The resulting polyether polyamide elastomer was used and subjected to extrusion molding at a temperature of 260 °C, thereby fabricating a non-stretched film having a thickness of about 100 μm. Results obtained by evaluating tensile physical properties by using this film are shown in Table 1.

[Table 1]

Table 1

| | | Example 1 | Example 2 | Comparative Example 1 | Comparative Example 2 | Comparative Example 3 |
|---|---|---|---|---|---|---|
| Composition ratio (molar ratio) | MXDA | 95 | 95 | 100 | 95 | 95 |
| | D-230 | 5 | - | - | 5 | - |
| | D-400 | - | 5 | - | - | 5 |
| | SA | 100 | 100 | 100 | - | - |
| | AA | - | - | - | 100 | 100 |
| Glass transition temperature (°C) | | 36.0 | 35.2 | 61.2 | 83.2 | 74.7 |
| Melting point (°C) | | 187.5 | 187.4 | 191.5 | 232.8 | 232.5 |
| Relative viscosity | | 1.45 | 1.42 | 1.80 | 1.45 | 1.43 |
| Rate of tensile elongation at break (%) | | 379.1 | 330.4 | 45.0 | 3.0 | 2.0 |
| Tensile elastic modulus (MPa) | | 977 | 582 | 1700 | 3226 | 3019 |

[Example 3]

In a reaction vessel having a capacity of about 3 L and equipped with a stirrer, a nitrogen gas inlet, and a condensed water discharge port, 809.00 g of sebacic acid (SA), 0.6229 g of sodium hypophosphite monohydrate, and 0.4339 g of sodium acetate were charged, and after thoroughly purging the inside of the vessel with nitrogen, the mixture was melted at 170 °C while feeding a nitrogen gas at a rate of 20 mL/min. A mixed liquid of 377.55 g of m-xylylenediamine (MXDA) and 161.81 g of p-xylylenediamine (PXDA) (molar ratio (MXDA/PXDA) = 70/30) and 9.20 g of a polyether diamine (a trade name: JEFFAMINE D-230, available from Huntsman Corporation, USA) was added dropwise thereto while gradually raising the temperature to 260 °C, and the mixture was polymerized for about 2 hours to obtain a polyether polyamide elastomer: ηr = 1.49, [COOH] = 93.33 μeq/g, [NH2] = 48.62 μeq/g, Mn = 14,089, Tg = 61.2 °C, Tch = 103.4 °C, and Tm = 210.0 °C.

The resulting polyether polyamide elastomer was used and subjected to extrusion molding at a temperature of 255 °C, thereby fabricating a non-stretched film having a thickness of about 100 μm. Results obtained by evaluating tensile physical properties by using this film are shown in Table 2.

[Example 4]

In a reaction vessel having a capacity of about 3 L and equipped with a stirrer, a nitrogen gas inlet, and a condensed water discharge port, 809.00 g of sebacic acid (SA), 0.6306 g of sodium hypophosphite monohydrate, and 0.4393 g of sodium acetate were charged, and after thoroughly purging the inside of the vessel with nitrogen, the mixture was melted at 170 °C while feeding a nitrogen gas at a rate of 20 mL/min. A mixed liquid of 362.29 g of m-xylylenediamine (MXDA) and 155.27 g of p-xylylenediamine (PXDA) (molar ratio (MXDA/PXDA) = 70/30) and 46.00 g of a polyether diamine (a trade name: JEFFAMINE D-230, available from Huntsman Corporation, USA) was added dropwise thereto while gradually raising the temperature to 260 °C, and the mixture was polymerized for about 2 hours to obtain a polyether

polyamide elastomer: ηr = 1.47, [COOH] = 45.35 μeq/g, [NH2] = 81.94 μeq/g, Mn = 15,712, Tg = 60.1 °C, Tch = 101.1 °C, and Tm = 208.5 °C.

The resulting polyether polyamide elastomer was used and subjected to extrusion molding at a temperature of 255 °C, thereby fabricating a non-stretched film having a thickness of about 100 μm. Results obtained by evaluating tensile physical properties by using this film are shown in Table 2.

[Example 5]

In a reaction vessel having a capacity of about 3 L and equipped with a stirrer, a nitrogen gas inlet, and a condensed water discharge port, 809.00 g of sebacic acid (SA), 0.6595 g of sodium hypophosphite monohydrate, and 0.4594 g of sodium acetate were charged, and after thoroughly purging the inside of the vessel with nitrogen, the mixture was melted at 170 °C while feeding a nitrogen gas at a rate of 20 mL/min. A mixed liquid of 305.09 g of m-xylylenediamine (MXDA) and 130.75 g of p-xylylenediamine (PXDA) (molar ratio (MXDA/PXDA) = 70/30) and 184.00 g of a polyether diamine (a trade name: JEFFAMINE D-230, available from Huntsman Corporation, USA) was added dropwise thereto while gradually raising the temperature to 260 °C, and the mixture was polymerized for about 2 hours to obtain a polyether polyamide elastomer: ηr = 1.35, [COOH] = 92.43 μeq/g, [NH2] = 64.77 μeq/g, Mn = 12,723, Tg = 32.1 °C, Tch = 80.9 °C, and Tm = 192.3 °C.

The resulting polyether polyamide elastomer was used and subjected to extrusion molding at a temperature of 225 °C, thereby fabricating a non-stretched film having a thickness of about 100 μm. Results obtained by evaluating tensile physical properties by using this film are shown in Table 2.

[Example 6]

In a reaction vessel having a capacity of about 3 L and equipped with a stirrer, a nitrogen gas inlet, and a condensed water discharge port, 809.00 g of sebacic acid (SA), 0.6512 g of sodium hypophosphite monohydrate, and 0.4536 g of sodium acetate were charged, and after thoroughly purging the inside of the vessel with nitrogen, the mixture was melted at 170 °C while feeding a nitrogen gas at a rate of 20 mL/min. A mixed liquid of 362.29 g of m-xylylenediamine (MXDA) and 155.27 g of p-xylylenediamine (PXDA) (molar ratio (MXDA/PXDA) = 70/30) and 86.00 g of a polyether diamine (a trade name: JEFFAMINE D-400, available from Huntsman Corporation, USA) was added dropwise thereto while gradually raising the temperature to 260 °C, and the mixture was polymerized for about 2 hours to obtain a polyether polyamide elastomer: ηr = 1.45, [COOH] = 108.95 μeq/g, [NH2] = 32.43 μeq/g, Mn = 14,146, Tg = 55.6 °C, Tch = 94.0 °C, and Tm = 207.4 °C.

The resulting polyether polyamide elastomer was used and subjected to extrusion molding at a temperature of 255 °C, thereby fabricating a non-stretched film having a thickness of about 100 μm. Results obtained by evaluating tensile physical properties by using this film are shown in Table 2.

(Comparative Example 4)

In a reaction vessel having a capacity of about 3 L and equipped with a stirrer, a nitrogen gas inlet, and a condensed water discharge port, 829.2 g of sebacic acid, 0.6365 g of sodium hypophosphite monohydrate, and 0.4434 g of sodium acetate were charged, and after thoroughly purging the inside of the vessel with nitrogen, the mixture was melted at 170 °C while feeding a nitrogen gas at a rate of 20 mL/min. A mixed liquid of 390.89 g of m-xylylenediamine (MXDA) and 167.53 g of p-xylylenediamine (PXDA) (molar ratio (MXDA/PXDA) = 70/30) was added dropwise thereto while gradually raising the temperature to 260 °C, and the mixture was polymerized for about 2 hours to obtain a polyamide: ηr = 2.20, [COOH] = 81.8 μeq/g, [NH2] = 26.9 μeq/g, Mn = 18,400, Tg = 65.9 °C, Tch = 100.1 °C, and Tm = 213.8 °C.

The resulting polyether polyamide elastomer was used and subjected to extrusion molding at a temperature of 240 °C, thereby fabricating a non-stretched film having a thickness of about 100 μm. Results obtained by evaluating tensile physical properties by using this film are shown in Table 2.

[Table 2]

Table 2

| | | Example 3 | Example 4 | Example 5 | Example 6 | Comparative Example 4 |
|---|---|---|---|---|---|---|
| Composition ratio (molar ratio) | MXDA + PXDA | 99 | 95 | 80 | 95 | 100 |
| | (MXDA/PXDA molar ratio) | (70/30) | (70/30) | (70/30) | (70/30) | (70/30) |
| | D-230 | 1 | 5 | 20 | - | - |
| | D-400 | - | - | - | 5 | - |
| | SA | 100 | 100 | 100 | 100 | 100 |
| Glass transition temperature (°C) | | 61.2 | 60.1 | 32.1 | 55.6 | 65.9 |
| Melting point (°C) | | 210.0 | 208.5 | 192.3 | 207.4 | 213.8 |
| Relative viscosity | | 1.49 | 1.47 | 1.35 | 1.45 | 2.20 |
| Rate of tensile elongation at break (%) | | 202.5 | 207.3 | 301.3 | 299.0 | 3.4 |
| Tensile elastic modulus (MPa) | | 1783 | 1641 | 480 | 570 | 2030 |

From the results of Examples 1 to 6, the polyether polyamide elastomer of the present invention has excellent flexibility while keeping a glass transition temperature and a melting point which a polyamide has at appropriate levels. That is, it is noted that the polyether polyamide elastomer of the present invention is a material which is excellent in terms of melt moldability and heat resistance because of a high melting point; excellent in terms of flexibility because of an excellent rate of tensile elongation at break; and excellent in terms of mechanical strength because of both an excellent rate of tensile elongation at break and an appropriate elastic modulus.

In addition, the polyether polyamide elastomer of the present invention also has high crystallinity which is derived from the aromatic ring-containing polyamide.

INDUSTRIAL APPLICABILITY

The polyether polyamide elastomer of the present invention is a novel polyether polyamide elastomer which is excellent in terms of melt moldability, crystallinity, flexibility, toughness, and the like and also excellent in terms of heat resistance, and it can be used for various industrial parts, gear connectors of mechanical and electrical precision instruments, fuel tubes around an automobile engine, connector parts, sliding parts, belts, hoses, electric and electronic parts such as silent gears, etc., sporting goods, and the like.

## Claims

1. A polyether polyamide elastomer comprising a diamine constituent unit derived from a polyether diamine compound (A-1) represented by the following general formula (1) and a xylylenediamine (A-2) and a dicarboxylic acid constituent unit derived from an α,ω-linear aliphatic dicarboxylic acid having a carbon number of from 8 to 20:

[Chem. 1]

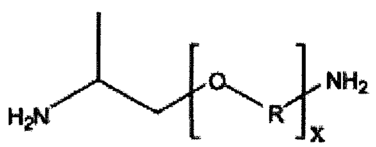

(1)

wherein x represents a numerical value of from 1 to 80; and R represents a propylene group.

2. The polyether polyamide elastomer according to claim 1, wherein the xylylenediamine (A-2) is m-xylylenediamine, p-xylylenediamine, or a mixture thereof.

**3.** The polyether polyamide elastomer according to claim 1 or 2, wherein the xylylenediamine (A-2) is a mixture of m-xylylenediamine and p-xylylenediamine.

**4.** The polyether polyamide elastomer according to claim 1 or 2, wherein the xylylenediamine (A-2) is m-xylylenediamine.

**5.** The polyether polyamide elastomer according to any one of claims 1 to 4, wherein the α,ω-linear aliphatic dicarboxylic acid having a carbon number of from 8 to 20 is sebacic acid.

**6.** The polyether polyamide elastomer according to any one of claims 1 to 5, wherein a proportion of the constituent unit derived from the xylylenediamine (A-2) in the diamine constituent unit is from 50 to 99.9 % by mole.

**7.** The polyether polyamide elastomer according to any one of claims 1 to 6, wherein a relative viscosity of the polyether polyamide elastomer is from 1.2 to 3.0.

**8.** The polyether polyamide elastomer according to any one of claims 1 to 7, wherein a melting point of the polyether polyamide elastomer is from 170 °C to 230 °C.

**9.** The polyether polyamide elastomer according to any one of claims 1 to 8, wherein a rate of tensile elongation at break of the polyether polyamide elastomer at a measurement temperature of 23 °C and a humidity of 50 %RH is 100 % or more.

**INTERNATIONAL SEARCH REPORT**

International application No.
PCT/JP2013/050319

A. CLASSIFICATION OF SUBJECT MATTER
*C08G69/40*(2006.01)i

According to International Patent Classification (IPC) or to both national classification and IPC

B. FIELDS SEARCHED

Minimum documentation searched (classification system followed by classification symbols)
C08G69/00-69/50

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)
CA/REGISTRY(STN)

C. DOCUMENTS CONSIDERED TO BE RELEVANT

| Category* | Citation of document, with indication, where appropriate, of the relevant passages | Relevant to claim No. |
|---|---|---|
| X<br>A | JP 08-208833 A (Terumo Corp.),<br>13 August 1996 (13.08.1996),<br>claims; paragraphs [0017], [0018], [0026]<br>(Family: none) | 1-6,8,9<br>7 |
| X | JP 06-335522 A (Terumo Corp.),<br>06 December 1994 (06.12.1994),<br>claims; paragraphs [0007], [0014], [0017],<br>[0039] to [0041]<br>& EP 600793 A1 & DE 69308764 C<br>& DE 69308764 D | 1-9 |

[×] Further documents are listed in the continuation of Box C. [ ] See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 06 February, 2013 (06.02.13) | 19 February, 2013 (19.02.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2013/050319

C (Continuation). DOCUMENTS CONSIDERED TO BE RELEVANT

| Category* | Citation of document, with indication, where appropriate, of the relevant passages | Relevant to claim No. |
|---|---|---|
| X | JP 03-237131 A (Mitsubishi Kasei Corp.), 23 October 1991 (23.10.1991), claims; page 3, lower right column, line 9 to page 4, lower right column, line 10; page 6, lower right column, line 2 to page 7, upper column (Family: none) | 1-9 |
| A | JP 05-320336 A (Fuji Kasei Kogyo Co., Ltd.), 03 December 1993 (03.12.1993), entire text (Family: none) | 1-9 |
| A | JP 04-018419 A (Texaco Chemical Co.), 22 January 1992 (22.01.1992), entire text & US 5091572 A & US 5138097 A & EP 432943 A2 & DE 69009949 C & DE 69009949 D | 1-9 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2004161964 A
- JP 2004346274 A